# EUROPEAN PATENT APPLICATION

(11) **EP 1 602 409 A1**
(43) Date of publication of application: **07.12.2005**
(21) Application number: 04253240.8
(22) Date of filing: 01.06.2004
(51) Int. Cl.: B01L 3/00, B01L 3/02

(54) **Filtration unit**

(71) Applicant: The Automation Partnership (Cambridge) Limited, Royston, Hertfordshire SG8 5WY (GB)
(72) Inventor: Bargh, Arian Neil, London N87LS (GB)
(74) Representative: Brunner, Michael John

(57) **Abstract**

Two interconnected systems for retaining and filtering a fluid are provided. The systems may be used individually or together. The first system comprises a vessel having a lower section with an opening in its underside; filtration means provided in the lower section of the vessel; and means for providing a positive pressure through the underside of the vessel to the filtration means, whereby the fluid can be retained in the vessel above the filter. The second system comprises a vessel having a lower section with an opening in its underside; filtration means provided in the lower section in the base of the vessel; a pipette head provided with at least one plunger to force fluid through the filtration means.

## Description

The present invention relates to a system for retaining and filtering a fluid.

In semi-automated and fully automated laboratories it is frequently necessary to purify protein that is produced. Affinity purification is a common method of purifying proteins in the laboratory. This purification technique works by attaching affinity tags to small beads with a typical diameter of 50µm. The target protein binds to the affinity tags and is also, therefore, attached indirectly to the beads. The beads and the solution previously containing the protein is then filtered in order to isolate the beads. These beads are then washed and filtered to purify the protein. After washing steps have been completed the protein is then removed from the beads by using an elution buffer that has a higher affinity for the affinity tags than the protein. The purified protein is hence collected.

Bead based protein purification can be carried out in multi-well filter plates. Typically, a solution containing the target protein to be purified is added to a filter plate containing affinity beads. After a binding period, a vacuum is applied to the underside of the filter plate to draw the unwanted liquid through the filter plate leaving the protein, bound to the beads, on top of the filter.

However a number of problems are encountered with multi-well filter plate protein purification of this type. Firstly, if a large volume of liquid is to be filtered or if the liquid has a large proportion of particulate matter suspended within it, the filters can become blocked. A larger filter pore size results in fewer blockages, however, if the pore size is too large liquid will drip through the filter plate prematurely before efficient binding of the protein to the beads has taken place.

A further problem arises from the use of a vacuum to draw the liquid through the filter plates. In general, the flow of liquid through the filter is different in different wells. When the first well empties and the air starts to flow through the filter, the pressure differential across the filters of the other wells is lost and filtration is slowed or stopped in the other wells. This could be overcome by providing an individual manifold to apply the vacuum to the underside of each individual well however this is both impractical and expensive and a common manifold is generally used. A further, related, problem is that, once all of the liquid has been drawn through a filter plate air starts to be drawn through the filter and this, in turn, results in a large quantity of foam being generated very quickly. Foaming is detrimental to the quality of the proteins which degrade on contact with the air. Furthermore, the foaming can result in cross contamination between the wells.

The filtration unit of the present invention aims to overcome the above mentioned problems by enabling large volumes of liquid with a high particulate load to be filtered through a large pore size filter, typically 25µm. A further aim of the present invention is to be able to control the filtration process in a more uniform manner enabling efficient filtration without the drawbacks of known systems as described above.

According to a first aspect of the present invention there is provided a system for retaining and filtering a fluid, the system comprising:
a vessel having a lower section with an opening in its underside;
filtration means provided in the lower section of the vessel; and
means for providing a positive pressure through the underside of the vessel to the filtration means,
whereby the fluid can be retained in the vessel above the filter.

The application of positive pressure to the underside of the vessel overcomes the problem of fluid dripping through the filter before the filtration process is intended to begin.

Furthermore according to second aspect of the present invention there is provided A system for retaining and filtering a fluid, the system comprising:
a vessel having a lower section with an opening in its underside;
filtration means provided in the lower section in the base of the vessel;
a pipette head provided with at least one plunger to force fluid through the filtration means.

The use of the plunger to force the fluid through the filter is an alternative to known systems that rely on the application of a negative pressure to the underside of the vessel. The plungers overcome the problem of foaming and provide a controlled flow of fluid through the filter.

Preferably, the plunger is formed from a pipette head with the pipette tip removed.

Preferably, the pipette head is further provided with at least one tip through which fluid is aspirated or dispensed. This enables the pipette head to provide a dual function. The tip is provided on the lower surface of a support portion that co-operates with the plunger. In this way, through the removal and re-attachment of the tips the same head can aspirate, dispense and force fluid through the filter.

Preferably, the fluid to be filtered further comprises suspended beads. These beads have affinity tags that allow the proteins to bind to the beads and prevent them from passing through the filter.

Preferably, the vessel is divided to form a plurality of wells.

Preferably, a filtration apparatus is provided combining the two systems described above.

The systems described above are used together in a method for retaining and filtering a fluid, comprising the steps of:
applying positive pressure to an opening in the underside of a filtration vessel;
introducing fluid into the vessel through a pipette tip mounted on a pipette head;
whereby the fluid can be retained above a filtration means provided in the lower section of the vessel,
moving a plunger to force fluid through the filtration means.

Preferably, the method further comprises the step of ceasing to apply the positive pressure to the opening prior to moving the plunger to force fluid through the filtration means.

A system according to the present invention will now be further described with reference to the accompanying drawings in which:
Figures 1 to 4 show the system in various states through a single use cycle;

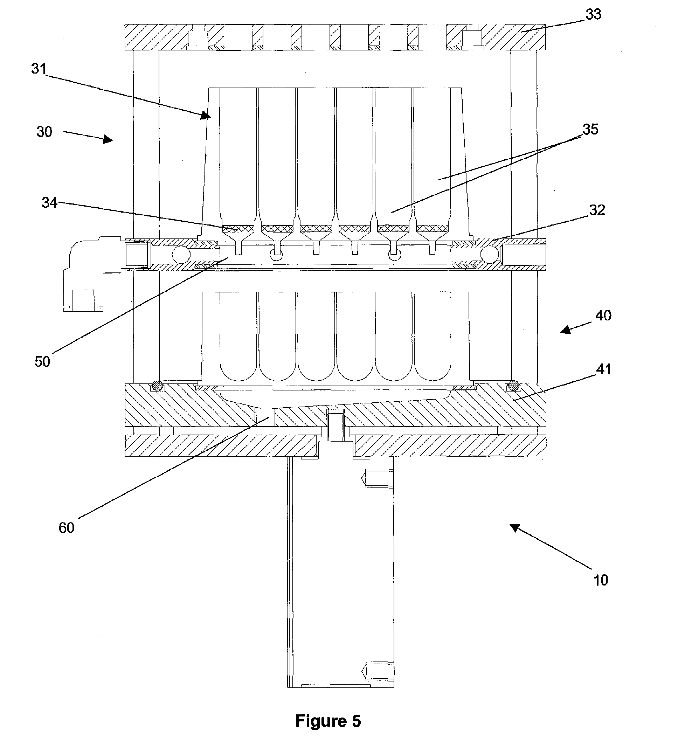

Figure 5 shows a cross section of the detail of the system focussing particularly on a head portion applying pressure to cause fluid to be filtered into a collection plate below;

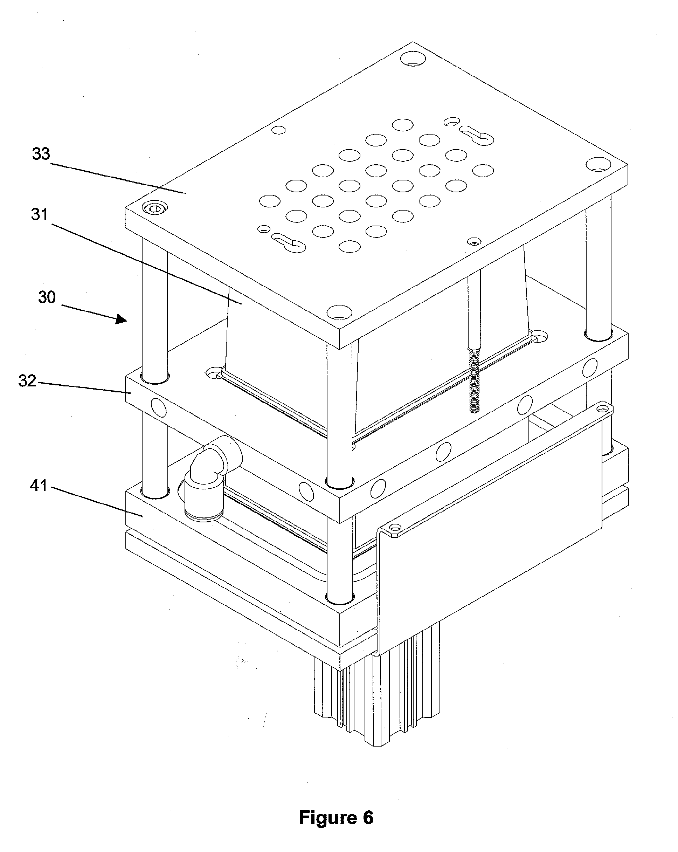

Figure 6 shows a perspective view of the system according to the present invention.

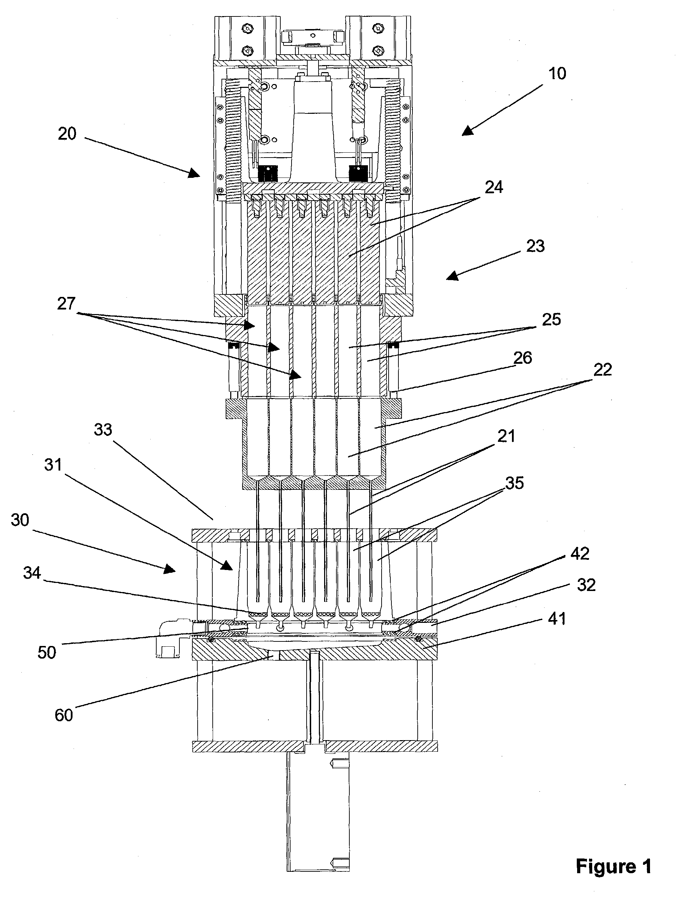

Figures 1 to 4 show a system 10 according to the present invention which comprises a pipette head block 20, a filtration unit 30, a collection plate 40, a common manifold 50, for the application of positive pressure, and a waste drain 60.

The pipette head 20 comprises an array of elements 27 each of which has a tip 21 that is capable of both aspirating and dispensing fluid and which extends from a support portion 22 above which is a plunger portion 23 comprising a plunger 24 and a plunger receiving cylinder 25 that lies between the plunger 24 and the support portion 22. Each element 27 capable of aspirating and dispensing fluid through the tip 21. The tips 21 and support portions 22 are together removable to enable the lower surface of the plunger receiving cylinders 25 to come into contact with an upper support 33 of the filtration unit 30. In addition, the entire pipette head block 20 is movable relative to the filtration unit 30, collection plate 40, manifold 50 and waste drain 60. When the pipette head block 20 is moved down, the housing 26 that surrounds the plunger receiving cylinders 25 interfaces with the upper support 33 of the filtration unit 30.

The filtration process will now be described with reference to figures 1 to 4. Initially the filtration unit is empty and ready for the loading of a filter plate 31 (which has an array of elongate filter chambers 35) onto the filter plate support platform 32. The collection plate support platform 41 is moved up and seals to the underside of the filter plate support platform 32 which in turn is raised a small amount in order to seal the top of the filter plate to the upper support 33. The pipette head block 20 is then moved down so that the tips 21 enter the filter chambers 35 as shown in Figure 1.

Beads in suspension are then pipetted by the pipette head block 20, through the aspirating/dispensing tips 21 into the filter plate 31. At the same time positive pressure is applied to the underside of the filter plate 31 through the common manifold 50. The value of the positive pressure is of the order to 0.01 bar (1000Pa) which is sufficient to support a head of 10cm of liquid in the filter plate 31.

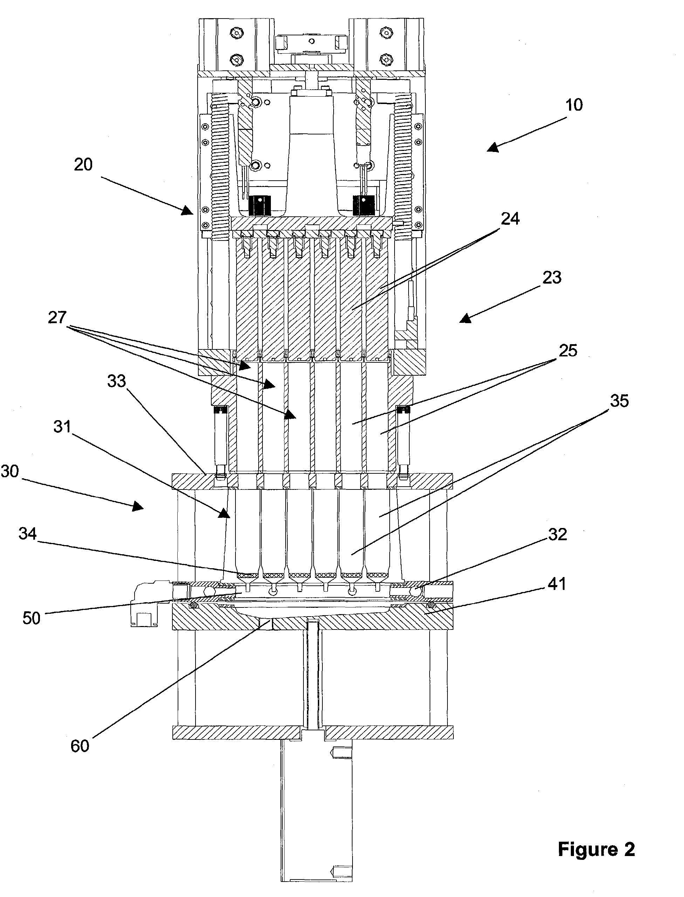

The pipette head block 20 is then raised and the aspirating/dispensing tips 21 and support portions 22 are removed before (see Figure 2) the pipette head block 20 is moved down to seal to the upper support 33 of the filtration unit 30. The plungers 24 are then moved downwardly into the plunger receiving cylinders 25 to force the liquid through the filters 34. The pressure required is of the order of 0.5 bar (50000Pa) although up to 2 or 3 bars can be used. The pressure applied to force the liquid through the filter is sufficient to overcome the positive pressure provided by the common manifold 50 and therefore the liquid can be forced through the filters 34 even when positive pressure is still provided by the common manifold.

The aspirating/dispensing tips 21 are then (not shown) re-attached to the pipette head 20 and lysates are pipetted by the pipette head block 20 into the filter plate 31. During this operation the positive pressure supplied by the common manifold 50 is switched on so that a positive pressure is applied to the underside of the filter plate 31.

The pipette head block 20, with tips 21 and support portions 22 attached, is then used to aspirate and dispense the contents of the filter plate 31 in order to mix the lysate and the beads. The mixing process speeds up the protein binding to the beads. During this process the positive pressure supplied by the common manifold 50 to the underside of the filter plate 31 prevents the liquid from dripping through the filter 34.

The aspirating/dispensing tips 21 and support portions 22 are then (not shown) removed again and the lower surface of the plunger receiving cylinder 25 of each element 27 is brought into contact with the upper support 33 of the filtration unit 30 in order to provide a seal therebetween. The plungers 23 are then used to force the liquid through the filter during which process the positive pressure supplied by the manifold 50 is switched off.

The aspirating/dispensing tips 21 are washed *in situ* on the pipette head 20. The block 20 is moved horizontally relative to the filtration unit 30 and the tips 21 are lowered into a container of wash fluid which is repeatedly aspirated and dispensed in order to clean the tips 21. This wash cycle for the tips 21 takes place before the tips 21 are removed. Alternatively, a new set of tips can be used. Once the tips 21 have been re-attached (not shown) to the lower surface of the support portions 22 and a wash liquid is pipetted into the filter plate 31 during which time the positive pressure is applied through the common manifold 50 to the underside of the filter plate 31.

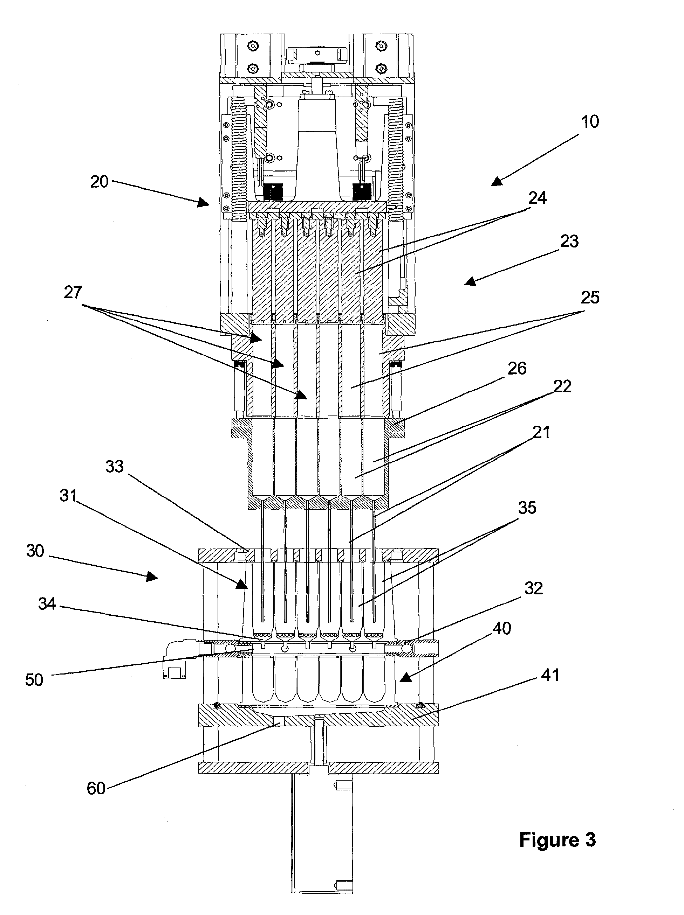

After the aspirating/dispensing tips 21 have been used to introduce and agitate wash liquid within the filter plate 31, the aspirating/dispensing tips 21 are then removed again and the support portion is moved into connection with the upper support 33 of the filtration unit 30 and the plungers 23 are used to force the liquid through the filter. The collection plate support platform 41 is then lowered and a collection plate 40 is loaded onto the support platform 41 as shown in Figure 3.

When the collection plate 40 has been installed, the collection plate support platform 41 is raised in order to seal the plates. The aspirating/dispensing tips 21 are re-attached to the pipette head block 20 and an elution buffer is pipetted by the pipette head block 20 into the filter plate 31. The tips 21 may be a new set or the same set used earlier after cleaning has taken place. During this step of the procedure the positive pressure is supplied by the common manifold 50 to the lower surface of the filter plate 31. The manifold 50 is sealed to the lower surface of the filter plate 31 using seals 42. The pipette head block 20 is used to aspirate and dispense the combination of the elution buffer and the beads in order to mix them together and speed up the elution of the protein from the beads.

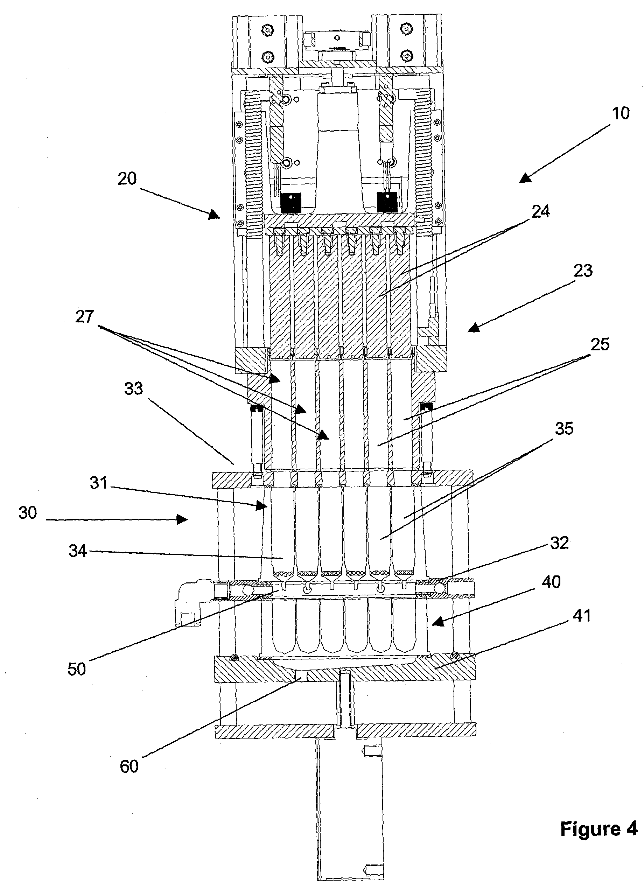

As shown in Figure 4, the pipette head block 20, with the aspirating/dispensing tips 21 removed, seals to the upper support 33 of the filtration unit 30 and the plungers 23 are then used to force the liquid through the filter 34. The liquid, now containing the required protein, drips through into the collection plate 40 below. The collection plate support platform 41 is then lowered and the filter plate 31 and collection plate 40 are removed. The system 10 is then ready to begin a new cycle.

## Claims

1. A system for retaining and filtering a fluid, the system comprising:
a vessel having a lower section with an opening in its underside;
filtration means provided in the lower section of the vessel; and
means for providing a positive pressure through the underside of the vessel to the filtration means,
whereby the fluid can be retained in the vessel above the filter.

2. A system for retaining and filtering a fluid, the system comprising:
a vessel having a lower section with an opening in its underside;
filtration means provided in the lower section in the base of the vessel;
a pipette head provided with at least one plunger to force fluid through the filtration means.

3. The system according to claim 1 or claim 2, wherein the plunger is formed from a pipette head with the pipette tip removed.

4. The system according to any of claims 1 to 3, wherein the pipette head is further provided with at least one tip through which fluid is aspirated or dispensed.

5. The system according to any of claims 1 to 4, wherein the fluid to be filtered further comprises suspended beads.

6. The system according to any of claims 1 to 5, wherein the vessel is divided to form a plurality of wells.

7. A filtration apparatus comprising a system according to claim 1 and a system according to claim 2.

8. A method for retaining and filtering a fluid, comprising the steps of:
applying positive pressure to an opening in the underside of a filtration vessel;
introducing fluid into the vessel through a pipette tip mounted on a pipette head;
whereby the fluid can be retained above a filtration means provided in the lower section of the vessel, and
moving a plunger to force fluid through the filtration means.

9. The method according to claim 5, further comprising the step of ceasing to apply the positive pressure to the opening prior to moving the plunger to force fluid through the filtration means.
